# EUROPEAN PATENT SPECIFICATION

(11) **EP 2 035 653 B1**
(45) Date of publication and mention of the grant of the patent: **29.12.2010**
(21) Application number: 07747664.6
(22) Date of filing: 18.06.2007
(51) Int. Cl.: E21B 33/08

(54) **PACKER ELEMENT FOR USE IN A STUFFING BOX**
PACKERELEMENT ZUR VERWENDUNG IN EINER STOPFBUCHSE
ÉLÉMENT GARNITURE D'ÉTANCHÉITÉ À UTILISER DANS UN PRESSE-ÉTOUPE

(30) Priority: 19.06.2006 NO 20062875
(43) Date of publication of application: 18.03.2009
(73) Proprietor: Stokkan, Per, 3264 Larvik (NO)
(72) Inventor: Stokkan, Per, 3264 Larvik (NO)
(74) Representative: Onsagers Ltd
(86) International application number: PCT/NO2007/000214
(87) International publication number: WO 2007/148980

(56) References cited:
- EP-A- 1 582 699
- GB-A- 650 641
- US-A- 2 731 282
- US-A- 3 689 082
- US-A- 4 424 861

## Description

The present invention regards a packer element for use in a stuffing box, a method for producing the packer element and a method for installing the packer element in the stuffing box.

In several applications there are used packers to seal between two relative movable elements, i.e. a dynamic sealing between to relative movable part. This may for instance be between a rotating shaft, pipe, drum etc. and a house, this may for instance be an impeller for pumping, mixing or processing action or other equipment with different relative movable parts of a machinery. With this there is always the challenge of providing an acceptable sealing connection which has as large operating lifecycle as possible, and which sealing connection has a good certainty for the length of the life time.

Normally such a connection will be a made by a stuffing box arranged around a shaft, for positioning of several packer elements. The stuffing box will be bolted or welded to the house and have a configuration making it possible to tighten the distance between two elements forming the box and thereby increase the pressure on the packer elements and thereby the connection.

There will normally be more than one packer element, normally between three and six, in the stuffing box. There are several types of packer elements used in such stuffing boxes. Know packer elements are for instance packer elements made of a fiber material in the full cross section of the packer elements, this fiber material may for instance be PTFE (Polytetrafluoroethylene), polymid or aramid fibre. These packers will normally be formed by braiding the fiber material. Another kind of a packer element has a core of an elastic material as for instance TPE (thermoplastic elastomere) and with a braided layer of fiber material around the elastic inner core.

Large diameter shaft creates an additional challenge in that it is more difficult to keep low tolerance in the aligning of the shaft relative the stuffing box, especially in the case if these shafts are operated with temperature differences and or changes. Small deviations in alignment of the shaft relative to the stuffing box, will give relative large variations around the shaft, with a positive change on one side and a negative change on the opposite side, since the stuffing box by its welding to the house, will be still and not move with the shaft. There is in addition the case when the stuffing box and its connection to the other machinery will loosen and thereby cause misalignment of the shaft relative the stuffing box. This creates a challenge in providing a packer solution which is tight even with misalignment and that last for some time. Normally a maintenance or repair of a packer element in such a stuffing box is something that may close down the whole production, and is something one does not want to happen more often than absolutely necessary.

Different kind of sealing arrangements for instance described in publication EP 1582699 A2, US 2731282 and US 3689082. The most relevant document is considered to be 1582699 describing a seal having a first seal mechanism adapted for insertion between a first structure and a second structure, wherein the first structure is in communication with a first medium and the second structure is in communication with a second medium, the seal also includes a second seal mechanism, which is pressuringly biasable against the first seal mechanism and against the second structure by the second medium. In certain embodiment, a system has a first structure in communication with a first medium and a second structure houses a seal assembly between the first and second structures, the seal assembly includes an interface seal disposed against the first structure and flexible seal pressuringly biased against the second structure and the interface seal by a second medium.

An aim with the present invention is to provide a solution which gives a packer element in a stuffing box with a long life cycle and which may handle to larger tolerances between the relative moveable parts. There is also an aim to provide a packer element which will give a secure sealing around the shaft, which is more independent on the positioning of the shaft relative the stuffing box, thereby allowing misalignment of the elements relative each other. There is also an aim to provide a packer which with low pressure in the connection gives a secure sealing between the two relative movable parts. There is also an aim to provide a packer element which may be adjusted easily in response to differences in the processing pressure in the systems. There is also an aim to provide a packer element which alleviate some or all of the problems with the present packer elements for shafts with larger diameter which rotate at a relative low rpm.

The above mentioned aims are fulfilled with the present invention as defined in the attached claims.

The present invention regards a packer element for use in a stuffing box for sealing between to relative movable elements for instance a shaft, pipe, drum etc and house. The packer element is especially suitable for sealing between movable elements as a shaft, with large diameter and low rpm. One may have good use for the packer element according to the invention in application where the shaft, pipe or drum or similar has a diameter from 50 mm to several meters and where the rotational speed is almost zero up to 15 m/s. One non-limiting example is dehydration of paper pulp where the shaft would have a diameter of 500 to 1500 mm with a RPM from below 1 up to 20.

The packer element comprises an inner elastic material forming a layer of elastic material around an inner void and an outer abrasion layer made by braided fibre, films, mats or similar. There may be several layers to the packer element, for instance several layers of similar or different outer fibre layers, there may also be different layers of the inner elastic material.

According to the invention the packer elements comprises the inner void, which inner void is mostly fluid tight and comprises at least one opening to the outside of the packer element, for pressurizing of the inner void. By mostly fluid tight one should in this application understand a fluid tight void or also a void capable of holding most of the fluid added to the void within the void. If there are some smaller leakages of fluid from the inner void to the outside, by for instance the making on some small holes with an distance between them, this should be understood to be within the scope of the invention in this application. There may also be an inner void which is fluid tight and an additional outer inner void which is mostly fluid tight, giving some minor leakage of the added fluid to the outside of the packer element. One possibility is also to have one inner fluid tight inner void and next to this within the outer abrasion lay anther mostly fluid tight inner void.

This gives the possibility of adding a pressurized fluid to the inner void of the packer element. By having the inner void pressurized at a given pressure the packer element will act on the shaft with the same pressure all around the circumference of the shaft independent on small deviations of the orientation of the shaft and or stuffing box. By its nature this gives a more even wear of the packer element and thereby a longer life cycle for the packer element. By monitoring the pressure in the packer elements one may easily also monitor the sealing capacity of the packer element.

In addition, this gives the possibility of easily regulating the sealing capacity of the packer elements in response to variations in pressure around the packer element. This may for instance be done by using a sensor measuring the pressure in the processing fluid and thereby regulating the pressure in the inner void of the packer element.

The fluid added to the inner void of the packer element may be several kinds of fluid, for instance a gas, as pressurized air normally present in a processing plant, or it may be a liquid as water or other lubricant. By having more than one hole into the inner void one may also arrange the adding of the fluid in such a manner than one gets circulation of fluid through the packer elements and thereby either cooling or heating of the packer.

According to the invention the elastic layer may form a fluid tight barrier for the inner void, or there may be a specific fluid tight layer internally of or within the elastic layer. Preferably the outer abrasion layer is braided around the elastic material or formed as a film, made of mats or in other manner arranged around the inner elastic layer. There may be several layers of the outer fiber material, which layers may be formed by the same or different fiber materials, dependent on the use of the packer element.

In the at least on opening into the inner void there may be provided an inlet device. This inlet device may comprise a male element and a female element. The male element may be inserted though the hole and may comprise a flange with a flange surface abutting a surface section of the inner void. Another part of the male elements may protrude through the hole and to the outside and into contact with the female element. The female element may be formed with a flange with a flange surface abutting an outer surface section of the packer element. When the male and female element are moved toward each other these two flange surface sections of the female and male element respectively, will lock a part of the packer element between the them, and thereby lock the inlet device relative the hole of the packer element. The opposite surface of the flange of the male element may be formed as a cone or truncated cone for easier insertion into the hole in the packer element.

There is according to an aspect of the invention a threaded connection between the male and female element of the inlet device. There may however be different connection as snap-lock, bayonet coupling or locking dogs etc.

The inlet device comprises preferably means for connection to a source of a pressurized fluid, which means is standard equipment for connection of for instance an air pressure hose or other source of pressurized fluid.

According to an aspect of the invention the inner elastic material has an even thickness around the circumference in a cross section of the inner void. The inner elastic material forms thereby an inner layer of the packer element. This layer may in other packer elements have a varying thickness or an even thickness throughout the packer element both seen in the cross section but also along the length of the packer element.

In one embodiment the packer element may be mainly round in a non- assembled form, since it by the internal pressure and its innate flexibility will form itself to the surrounding, the walls of the stuffing box and a surface of the rotating element. The packer element may be formed with a more rectangular or quadratic cross section and or corresponding to the area in the stuffing box it should occupy.

In a stuffing box there may be positioned one or several packer elements according to the invention. One may also envisage a stuffing box with a packer element according to the invention and a prior known packer element. There may also be positioned one packer element with a fluid tight inner elastic layer and a packer element with a mostly fluid tight inner elastic layer in the same stuffing box.

The invention also regards a method for manufacture a packer element comprising the steps of; providing a length of an inner elastic material with an inner void, by for instance extruding. The internal void of the elastic material will then be pressurized to keep a given form and at least one layer of fiber material may be braided around the elastic material, to form a length of a packer element. What sort of fiber in the layer, how many layers and the form of the braiding will be dependent on the use of the packer element. This length of packer elements may thereafter be cut to the desired length to form a packer element positioned around a shaft.

According to an aspect the process further comprises the steps making a hole through the fiber material and the elastic layer into the internal void, and positioning an inlet device into the hole and of thereafter welding the elastic layer of two ends of a length of elastic material with outer fiber material together. This welding of the elastic material may be done in the factory or at site for installation of the packer element.

The present invention also comprises a method for installing a packer element in a stuffing box arranged in connection with a shaft. The stuffing box is normally bolted to a house surrounding the shaft. The stuffing box further comprises two elements which together with a surface of the relative rotating element forms an enclosed room in the stuffing box. The connection between the two elements are normally done with a threaded connection. For prior art packer element, this threaded connection is there so that personnel can tighten the packer elements in the stuffing box and thereby tighten the sealing of the packer elements towards the shaft. According to the present the method of installing a packer elements according to the invention comprises the steps of providing an access through the wall of the stuffing box from the outside to the inside of the stuffing box, positioning a packer element within the stuffing box, with the hole aligned with the access, closing the stuffing box while limiting the movement of the two elements forming the stuffing box in the direction towards each other. One needs an access through the wall forming the stuffing box to be able to pressurize the inner void of the packer element. This access may be made by making a cut-out in a side of one of the parts forming the stuffing box, or making a hole through the side of the stuffing box. The differences are related to whether or not one is able to position the inlet device aligned with the access if there is only a hole and not a cut-out. One also wants to make sure that the elements forming the stuffing box is not inadvertently moved further together, since the pressure in the packer element according to the present invention is regulated by the added pressurized fluid added to the inner void in the packer element.

There are several ways on can prevent further movement of the two elements forming the stuffing box towards each other, for instance by adding a stopping sleeve in a threaded connection between the two elements forming the stuffing box, or one may fix the threaded connection between the two elements forming the stuffing box, by welding the threaded connection together. The inner void of the packer elements will also be connected to a source of pressurized fluid and pressurizing the inner void to the desired pressure. The packer element then act on the shaft with a given pressure all around the shaft, and this pressure may be monitored and regulated by adding or releasing the pressurized fluid within the void. The pressure with which the packer element acts can also easily be regulated in response to processing pressures around the packer element. There is with the present invention also the possibility of replacing other mechanical sealing devices with a packer element according to the present invention arranged in a stuffing box, even if the stuffing box is not present in the system as such from before.

With the present invention one has provided a solution to all the above mentioned aims and alleviated most of the disadvantages of prior known packer elements for use in a stuffing box.

The invention will now be explained with reference to the accompanying drawings where;
Fig. 1 shows prior art for a shaft with a stuffing box with two packer elements,
Fig. 2 shows a principle sketch of a solution according to the present invention,
Fig. 3 show a more detailed cross section of the packer element according to the invention,
Fig. 4 show a side view of a stuffing box with a packer element according to the invention, and
Fig. 5 shows a sketch of a packer element according to the invention connected to a fluid source.

Similar elements in all the figures are given the same reference numeral.

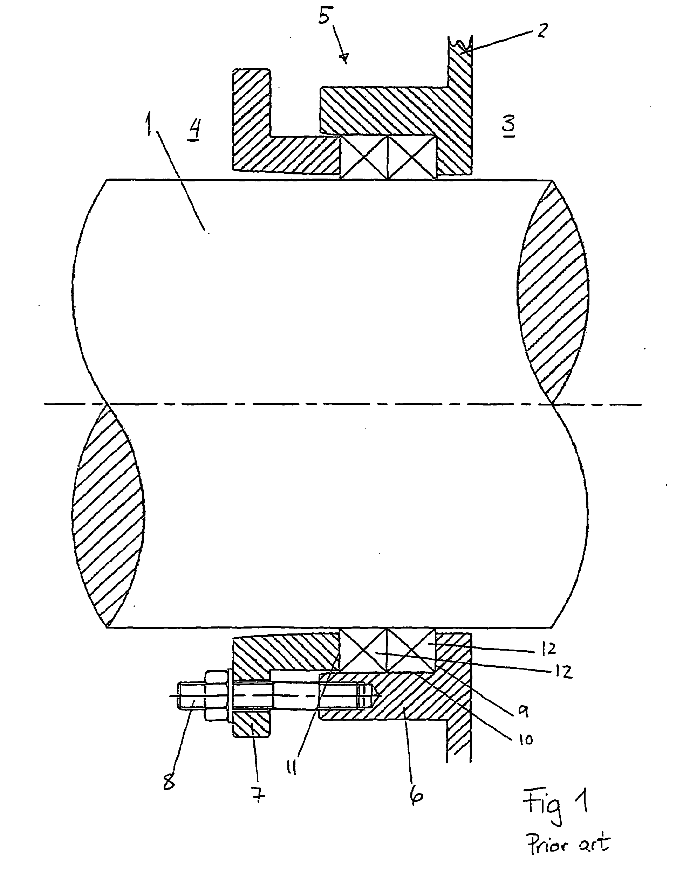

In fig. 1 there is shown partial cross section of a prior art solution with a shaft 1 arranged rotating within a stuffing box 5 attached to a house 2, just indicated. The stuffing box comprises a first element 6 and a second element 7 connected to each other by threaded connections 8. The first element 6 has internally a first surface 9 and a second surface 10, while the second element 7 has a third surface 11, which three surfaces 9,10,11 forms a housing around two prior art packer elements 12. These packer elements 12 is then abutting against the shaft 1 and sealing a first side 3 from a second side 4 of the shaft 1. The pressure of the packers 12 against the shaft 1, is dependent on the tightening of the threaded connections 8.

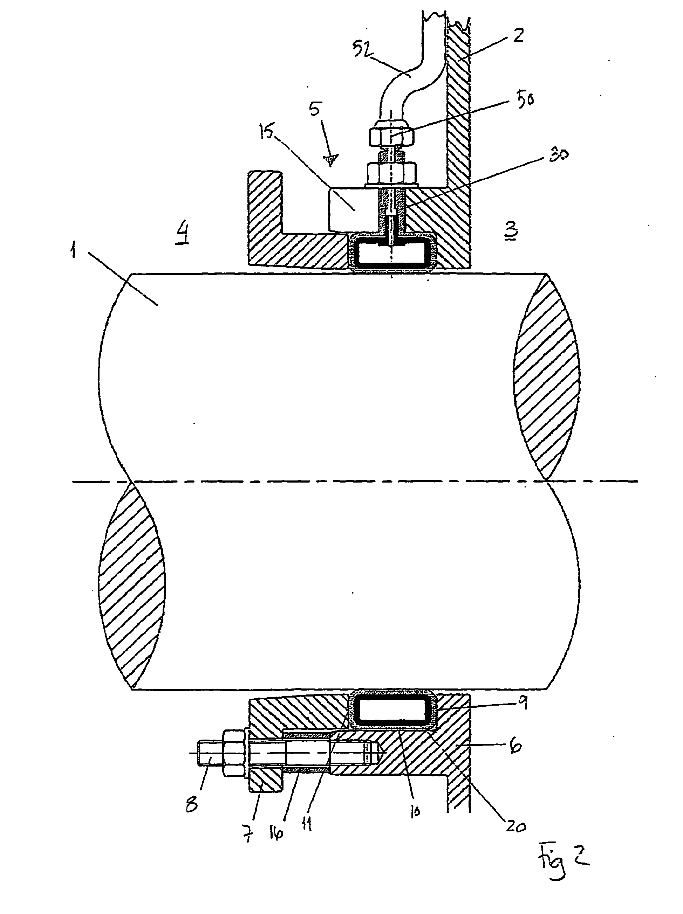

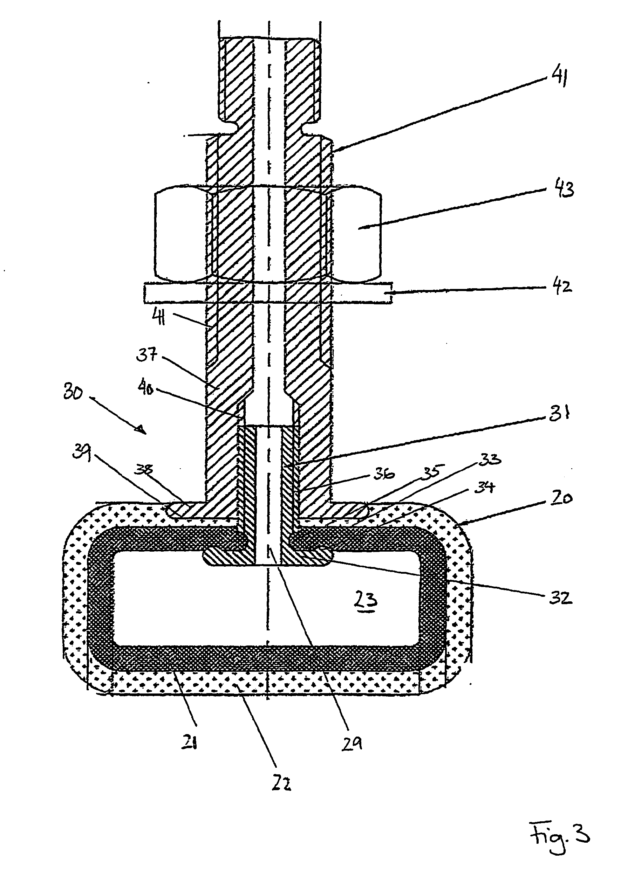

In fig. 2 there is shown a partial cross section of a shaft 1 arranged rotating within a stuffing box 5 with a packer element 20 according to the invention. Only elements which differ from the solution shown in fig. 1 will be discussed. There is one packer element 20 within the room formed between the first second and third surface 9,10,11 of the first 6 and second element 7 of the stuffing box and the shaft 1. This packer element 20 will be explains in more detail with reference to fig. 3. The stuffing box 5 is further provided with an access opening through a wall of the first elements 6 into the room. The packer element 20 comprises an inlet device 30 which is positioned in this access 15. In the threaded connections 8 between the first 6 and second element 7 of the stuffing box there is inserted a sleeve 16, preventing a further movement of the two elements 6,7 towards each other. An outer end of the inlet device 30 is attached to a connection 50 for connection of a fluid supply line 52, for adding a fluid to the inner void of the packer element 20.

In fig. 3 there is depicted a cross section of a packer element 20 with the inlet device 30. The packer element 20 comprises an inner layer of elastic material 21, having an inner void 23 within the inner elastic layer 21. Outside of the inner elastic layer 21 there is an outer layer 22 of fibre or film material. It is this outer fibre layer 22 which is in contact with the rotating shaft (not shown in fig. 3). This outer layer 22 may be formed in several ways and may also be added or saturated with a lubricant.

There is further an inlet device 30 inserted into a hole in the layers 21,22 of the packer element connecting the inner void 23, through a fluid passage 29 through the inlet device 30, to a fluid source (not shown) of pressurized fluid. The inlet device comprises a male element 31. This male element 31 comprises a flange 32, which is inserted through the hole in the layers and is positioned within the void 23 of the packer element. The flange 32 has a flange surface 33 abutting a section of the inner surface of the void 23, around the hole in the layers 21,22. This flange surface 33 has around its outer circumference a raised area 34 and the male element 31, has in its body a cut out area 35 close to the inner point of the flange 32 at the side of the flange surface 33. The body of the male element protruding through the hole of the layers 21,22 comprises further an outer threaded part 36. This outer threaded part 35 is interacting with an inner threaded part 40 of a female element 37 of the inlet device 30. The fluid passage 29 is extending through both the male 31, and female element 37 of the inlet device 30. The female element 37 comprises a flange 38, which flange 38 has a flange surface 39 abutting a section of the outer surface of the packer element, around the hole through the layers 21,22 of the packer element. When the male element 31 and the female element 37 are moved towards each other with the interaction of the inner threaded part 40 and the outer threaded part 36 the flange surfaces 33,39 will press and lock a part of the packer element between the flanges 31,38 and thereby lock the inlet device 30 to the packer element 20. The female element 37 also comprises means for connecting the inlet device to a fluid source, by having outer connection threads 41, washer 42 and nut 43 arranged around the outside of the female element 37.

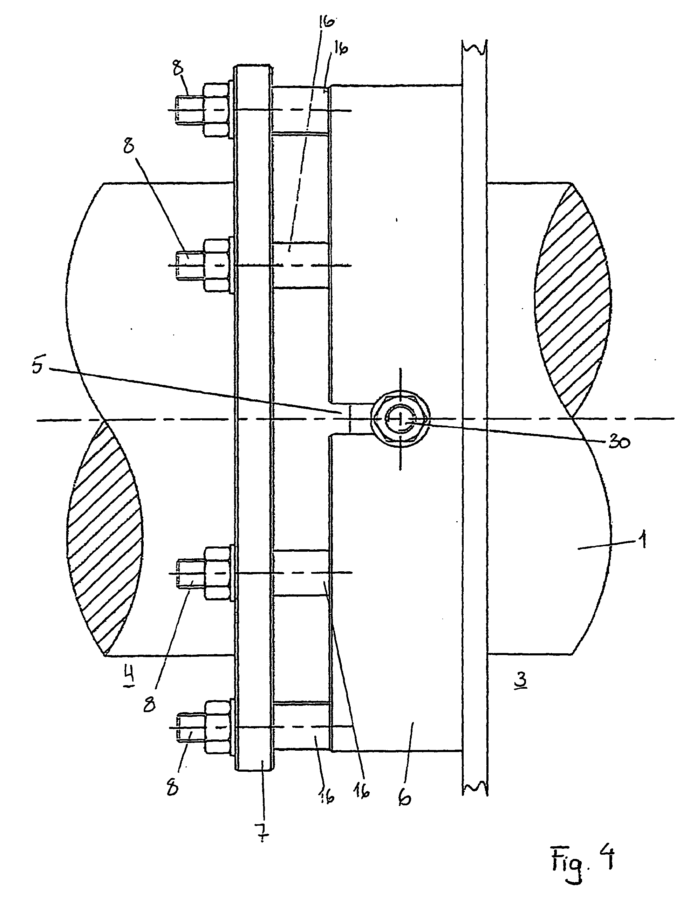

In fig. 4 there is shown a side view of a stuffing box with a first element 6 and a second element 7, and a packer element according to the invention. One can see the access opening 15 for positioning of the inlet device 30 attached to the packer element, and the sleeves 16 arranged in the threaded connections 8 between the first 6 and the second element 7 of the stuffing box.

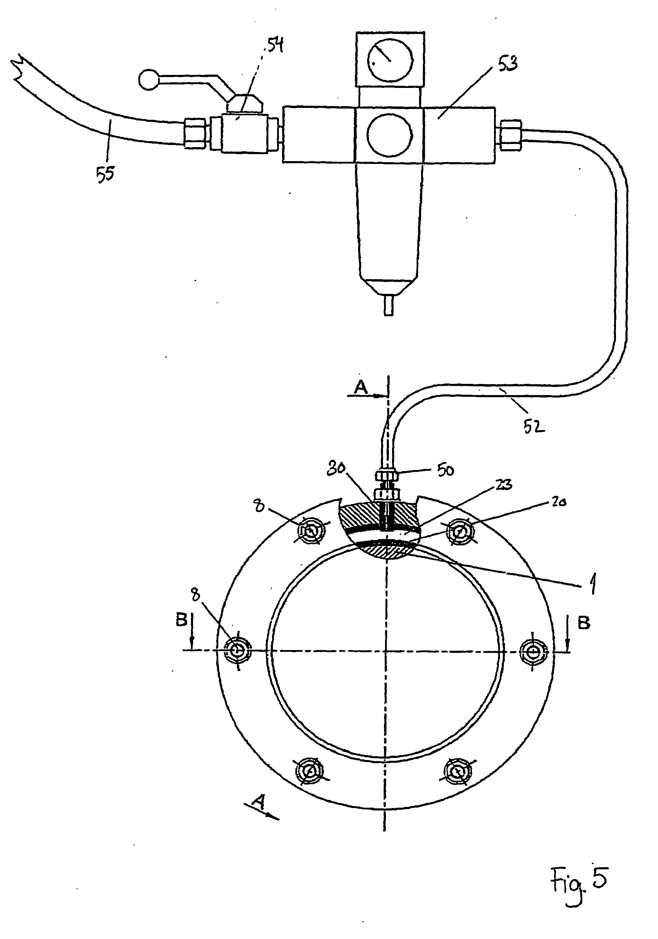

In fig. 5 there is shown a schematic sketch of the system according to the invention with the fluid supply line 52 attached to the inlet device 30 by the connection 50. The fluid supply line 52 is connected to a monitoring device 53, where one may monitor the pressure within the inner void 23 of the packer element 20 arranged around the shaft 1. There is to the monitoring device 53, attaches a control valve 54 for adding fluid to the packer element 20. This control valve 54 is through the fluid supply line 55 connected to a source of pressurized fluid (not shown).

The invention has now been explained with a preferred embodiment with reference to the accompanied drawings. A skilled person will understand that there may be made alterations or modifications to the shown embodiment that are within the scope of the invention as defined in the claims. The packer element may have a different cross section when it is within and outside of the stuffing box, the flange of the male element of the inlet device may be formed with a coned surface one the side opposite the flange surface for easier insertion through the hole in the packer element, there may be two or more packer elements within the stuffing box, access opening may be formed in a different manner as an aperture instead of a cut out from a side. There may be additional layers of other kind of material between the elastic layer and the outer fibre layer. There may be a groove in the outer surface of an inner elastic layer for insertion of a lubricant within the outer fibre layer, there may be two inlets to the inner void giving possibility to circulate a fluid within the inner void, etc.

## Claims

1. Packer element (20) for use in a stuffing box (5) for sealing between two relative movable elements for instance a shaft (1) and house (2), the packer element (20) comprises, in a cross section, an inner elastic material forming an inner elastic layer (21) surrounding an inner void (23) and an outer abrasion layer (22) outside the inner elastic layer (21) for sealing abutment against an element relatively movable in relation to the packer element (20), **characterised in that** the inner void (23) is mostly fluid tight and comprises means providing at least one opening to the outside of the packer element (20), for pressurizing of the inner void (23).

2. Packer element according to claim 1, **characterised in that** the elastic layer (21) forms a fluid tight barrier for the inner void (23).

3. Packer element according to claim 1 or 2, **characterised in that** the outer abrasion layer (22) is braided around the elastic layer (21).

4. Packer element according to claim 3, **characterised in that** the means providing access to the inner void (23) is at least one hole through the layers (21,22) forming the packer element, with an inlet device (30).

5. Packer element according to claim 4, **characterised in that** the inlet device (30) comprising a male element (31) with a flange surface (33) abutting as surface section of the inner void (23) and a female element (37) with a flange surface (39) abutting an outer surface section of the packer element (20), which two flange surfaces (33,39) when moved together lock a part of the packer element (20) between the them.

6. Packer element according to claim 5, **characterised in that** there is a threaded connection (36,40) between the male (31) and female (37) element of the inlet device.

7. Packer element according to claim 4, **characterised in that** the inlet device (30) comprises means (41) for connection to a source of a pressurized fluid.

8. Packer element according to claim 1, **characterised in that** the inner elastic layer (21) has an even thickness around the circumference in a cross section of the inner void (23).

9. Packer element according to claim 1, **characterised in that** it comprises more than one means (30) for providing access to the inner void (23).

10. Packer element according to claim 1, **characterised in that** it comprises several internal voids (23) within an outer abrasion layer (22).

11. Method for manufacture a packer element (20) according to claim 1, **characterised in that** it comprises the steps of; providing a length of an inner elastic layer (21) with an inner void (23), by for instance extruding, pressurizing the internal void (23) of the elastic layer (21) and adding at least one layer (22) of fiber material around the elastic layer (21).

12. Method according to claim 11, **characterised in that** it comprises making a hole through the fiber layer (22) and the elastic layer (21) into the internal void (23), positioning an inlet device (30) into the hole and the process further comprises the steps of welding the elastic layer (21) of two ends of a length of packer element together.

13. Method for installing a packer element according to claim 1, within a stuffing box (5) around a shaft (1), **characterised in that** it comprises the steps of providing an access (15) through the wall of the stuffing box (5) from the outside to the inside of the stuffing box (5), positioning a packer element (20) within the stuffing box, with the inlet device (30) aligned with the access (15), closing the stuffing box (5) while limiting the movement of the two elements (6,7) forming the stuffing box (5) in the direction towards each other.

14. Method according claim 13, **characterised in that** it comprises the step of adding a stopping sleeve (16) in a screwed connection (8) between the two elements (6,7) forming the stuffing box (5).

15. Method according to claim 13, **characterised in that** it comprises the step of fixing a screwed connection (8) between the two elements (6,7) forming the stuffing box (5), by welding the elements together.

16. Method according to claim 13, **characterised in that** it comprises the step of connecting the inner void (23) of the packer element (20) to a source of pressurized fluid and pressurizing the inner void (23) to the desired pressure.

## Patentansprüche

1. Dichtungselement (20) zur Verwendung in einer Stopfbuchse (5) zum Abdichten zwischen zwei relativ zueinander beweglichen Elementen, z. B. zwischen einer Welle (1) und einem Gehäuse (2), wobei das Dichtungselement (20) im Querschnitt ein inneres elastisches Material, das eine innere elastische Schicht (21) bildet und einen inneren Hohlraum (23) umgibt, und eine äußere Verschleißschicht (22) außerhalb der inneren elastischen Schicht (21) zur abdichtenden Anlage gegen ein Element aufweist, das relativ dazu in Relation zu dem Dichtungselement (20) beweglich ist,
**dadurch gekennzeichnet,**
**daß** der innere Hohlraum (23) weitgehend fluiddicht ist und eine Einrichtung besitzt, die mindestens eine Öffnung zu der Außenseite des Dichtungselementes (20) bietet, um den inneren Hohlraum (23) unter Druck zu setzen.

2. Dichtungselement nach Anspruch 1,
**dadurch gekennzeichnet,**
**daß** die elastische Schicht (21) eine fluiddichte Barriere für den inneren Hohlraum (23) bildet.

3. Dichtungselement nach Anspruch 1 oder 2,
**dadurch gekennzeichnet,**
**daß** die äußere Verschleißschicht (22) um die elastische Schicht (21) herum geflochten ist.

4. Dichtungselement nach Anspruch 3,
**dadurch gekennzeichnet,**
**daß** die Einrichtung, die einen Zugang zu dem inneren Hohlraum (23) bietet, mindestens ein Loch durch die das Dichtungselement bildenden Schichten (21,22) mit einer Einlaßeinrichtung (30) ist.

5. Dichtungselement nach Anspruch 4,
**dadurch gekennzeichnet,**
**daß** die Einlaßeinrichtung (30) ein vorstehendes Element (31) mit einer Flanschoberfläche (33), die gegen einen Oberflächenbereich des inneren Hohlraumes (23) anliegt, und ein Aussparungselement (37) mit einer Flanschoberfläche (39) aufweist, die gegen einen Außenoberflächenbereich des Dichtungselementes (20) anliegt, wobei die beiden Flanschoberflächen (33, 39), wenn sie zusammenbewegt werden, einen Teil des Dichtungselementes (20) zwischen ihnen blockieren.

6. Dichtungselement nach Anspruch 5,
**dadurch gekennzeichnet,**
**daß** eine Gewindeverbindung (36, 40) zwischen dem vorstehenden Element (31) und dem Aussparungselement (37) der Einlaßeinrichtung ausgebildet ist.

7. Dichtungselement nach Anspruch 4,
**dadurch gekennzeichnet,**
**daß** die Einlaßeinrichtung (30) eine Einrichtung (41) zur Verbindung mit einer Quelle für ein unter Druck stehendes Fluid aufweist.

8. Dichtungselement nach Anspruch 1,
**dadurch gekennzeichnet,**
**daß** die innere elastische Schicht (21) eine gleichmäßige Dicke um den Umfang in einem Querschnitt des inneren Hohlraumes (23) besitzt.

9. Dichtungselement nach Anspruch 1,
**dadurch gekennzeichnet,**
**daß** es mehr als eine Einrichtung (30) aufweist, um einen Zugang zu dem inneren Hohlraum (23) zu bieten.

10. Dichtungselement nach Anspruch 1,
**dadurch gekennzeichnet,**
**daß** es mehrere innere Hohlräume (23) innerhalb einer äußeren Verschleißschicht (22) aufweist.

11. Verfahren zum Herstellen eines Dichtungselements (20) nach Anspruch 1, **dadurch gekennzeichnet,**
**daß** es folgende Schritte aufweist:
- Bereitstellen einer Länge einer inneren elastischen Schicht (21) mit einem inneren Hohlraum (23), beispielsweise durch Extrudieren,
- Unter-Druck-Setzen des inneren Hohlraumes (23) der elastischen Schicht (21), und
- Hinzufügen von mindestens einer Schicht (22) aus Fasermaterial um die elastische Schicht (21).

12. Verfahren nach Anspruch 11,
**dadurch gekennzeichnet,**
**daß** es folgendes umfaßt:
Vorsehen eines Loches durch die Faserschicht (22) und die elastische Schicht (21) in den inneren Hohlraum (23), und Positionieren einer Einlaßeinrichtung (30) in dem Loch,
wobei das Verfahren ferner den Schritt umfaßt, die elastische Schicht (21) von zwei Enden einer Länge des Dichtungselementes zusammenzuschweißen.

13. Verfahren zum Installieren eines Dichtungselementes gemäß Anspruch 1 innerhalb einer Stopfbuchse (5) um eine Welle (1) herum,
**dadurch gekennzeichnet,**
**daß** es folgende Schritte umfaßt:
Vorsehen eines Zugangs (15) durch die Wand der Stopfbuchse (5) von der Außenseite zur Innenseite der Stopfbuchse (5), Positionieren eines Dichtungselementes (20) innerhalb der Stopfbuchse, wobei die Einlaßeinrichtung (30) mit dem Zugang (15) ausgefluchtet wird, und
Schließen der Stopfbuchse (5), während die Bewegung der beiden Elemente (6, 7), die die Stopfbuchse (5) bilden, in der Richtung zueinander begrenzt wird.

14. Verfahren nach Anspruch 13,
**dadurch gekennzeichnet,**
**daß** es den Schritt aufweist, eine Anschlaghülse (16) in einer Schraubverbindung (8) zwischen den beiden Elementen (6, 7), welche die Stopfbuchse (5) bilden, hinzuzufügen.

15. Verfahren nach Anspruch 13,
**dadurch gekennzeichnet,**
**daß** es den Schritt umfaßt, eine Schraubverbindung (8) zwischen den beiden Elementen (6, 7), welche die Stopfbuchse (5) bilden, zu fixieren, und zwar durch Zusammenschweißen der Elemente.

16. Verfahren nach Anspruch 13,
**dadurch gekennzeichnet,**
**daß** es den Schritt umfaßt, den inneren Hohlraum (23) des Dichtungselementes (20) mit einer Quelle für unter Druck stehendes Fluid zu verbinden und den inneren Hohlraum (23) auf den gewünschten Druck mit Druck zu beaufschlagen.

## Revendications

1. Élément garniture d'étanchéité (20) à utiliser dans un presse-étoupe (5) pour assurer l'étanchéité entre deux éléments mobiles l'un par rapport à l'autre, par exemple un arbre (1) et un logement (2), l'élément garniture d'étanchéité (20) comprenant, dans sa section transversale, un matériau interne élastique formant une couche interne élastique (21) entourant un vide interne (23) et une couche externe d'abrasion (22) située à l'extérieur de la couche interne élastique (21) pour venir une butée étanche contre un élément relativement mobile par rapport à l'élément garniture d'étanchéité (20), **caractérisé en ce que** le vide interne (23) est essentiellement étanche aux fluides et comprend des moyens fournissant au moins une ouverture vers l'extérieur de l'élément garniture d'étanchéité (20), pour la mise sous pression du vide interne (23).

2. Élément garniture d'étanchéité selon la revendication 1, **caractérisé en ce que** la couche élastique (21) forme une barrière étanche aux fluides pour le vide interne (23).

3. Élément garniture d'étanchéité selon la revendication 1 ou 2, **caractérisé en ce que** la couche externe d'abrasion (22) est soudée autour de la couche élastique (21).

4. Élément garniture d'étanchéité selon la revendication 3, **caractérisé en ce que** les moyens fournissant l'accès au vide interne (23) sont au moins un orifice traversant les couches (21, 22) formant l'élément garniture d'étanchéité, avec un dispositif d'admission (30).

5. Élément garniture d'étanchéité selon la revendication 4, **caractérisé en ce que** le dispositif d'admission (30) comprend un élément mâle (31) doté d'une surface formant bride (33) venant en butée contre une section formant surface du vide interne (23) et un élément femelle (37) doté d'une surface formant bride (39) venant en butée contre une section formant surface externe de l'élément garniture d'étanchéité (20), lesdites deux surfaces formant bride (33, 39) bloquant une partie de l'élément garniture d'étanchéité (20) entre elles lorsqu'elles se déplacent ensemble.

6. Élément garniture d'étanchéité selon la revendication 5, **caractérisé en ce qu'**un raccord fileté (36, 40) se trouve entre l'élément mâle (31) et l'élément femelle (37) du dispositif d'admission.

7. Élément garniture d'étanchéité selon la revendication 4, **caractérisé en ce que** le dispositif d'admission (30) comprend des moyens (41) permettant de le raccorder à une source de fluide sous pression.

8. Élément garniture d'étanchéité selon la revendication 1, **caractérisé en ce que** la couche interne élastique (21) présente une épaisseur égale autour de la circonférence dans une section transversale du vide interne (23).

9. Élément garniture d'étanchéité selon la revendication 1, **caractérisé en ce qu'**il comprend plusieurs moyens (30) permettant d'accéder au vide interne (23) .

10. Élément garniture d'étanchéité selon la revendication 1, **caractérisé en ce qu'**il comprend plusieurs vides internes (23) à l'intérieur d'une couche anti-abrasion (22).

11. Procédé de fabrication d'un élément garniture d'étanchéité (20) selon la revendication 1, **caractérisé en ce qu'**il comprend les étapes suivantes : fourniture d'une longueur d'une couche interne élastique (21) avec un vide interne (23), par exemple par extrusion, mise en pression du vide interne (23) de la couche élastique (21) et ajout d'au moins une couche (22) d'un matériau fibreux autour de la couche élastique (21).

12. Procédé selon la revendication 11, **caractérisé en ce qu'**il comprend la réalisation d'un orifice traversant la couche fibreuse (22) et la couche élastique (21) jusqu'au vide interne (23), le placement d'un dispositif d'admission (30) dans l'orifice et **en ce que** le procédé comprend en outre les étapes de soudage des couches élastiques (21) de deux extrémités d'une longueur de l'élément garniture d'étanchéité l'une à l'autre.

13. Procédé pour installer un élément garniture d'étanchéité selon la revendication 1 à l'intérieur d'un presse-étoupe (5) autour d'un arbre (1), **caractérisé en ce qu'**il comprend les étapes qui consistent à fournir un accès (15) à travers la paroi du presse-étoupe (5) de l'extérieur vers l'intérieur du presse-étoupe (5), à placer un élément garniture d'étanchéité (20) à l'intérieur du presse-étoupe (5) en alignant le dispositif d'admission (30) avec l'accès (15), à fermer le presse-étoupe (5) en limitant le mouvement des deux éléments (6, 7) formant le presse-étoupe (5) l'un en direction de l'autre.

14. Procédé selon la revendication 13, **caractérisé en ce qu'**il comprend l'étape qui consiste à ajouter un manchon d'arrêt (16) dans un raccord fileté (8) entre les deux éléments (6, 7) formant le presse-étoupe (5).

15. Procédé selon la revendication 13, **caractérisé en ce qu'**il comprend l'étape qui consiste à fixer un raccord fileté (8) entre les deux éléments (6, 7) formant le presse-étoupe (5), en soudant les éléments entre eux.

16. Procédé selon la revendication 13, **caractérisé en ce qu'**il comprend l'étape qui consiste à relier le vide interne (23) de l'élément garniture d'étanchéité (20) à une source de fluide sous pression et à mettre en pression le vide interne (23) selon la pression souhaitée.
